(19) **Europäisches Patentamt / European Patent Office / Office européen des brevets**

(11) **EP 1 957 779 B1**

(12) # FASCICULE DE BREVET EUROPEEN

(45) Date de publication et mention
de la délivrance du brevet:
**09.02.2011 Bulletin 2011/06**

(21) Numéro de dépôt: **06842059.5**

(22) Date de dépôt: **29.11.2006**

(51) Int Cl.:
*F02D 41/14* *(2006.01)*

(86) Numéro de dépôt international:
**PCT/FR2006/051248**

(87) Numéro de publication internationale:
**WO 2007/066028 (14.06.2007 Gazette 2007/24)**

(54) **PROCEDE DE COMMANDE D'UN MOTEUR DE VEHICULE POUR REGULER LA RICHESSE DU MELANGE AIR-CARBURANT**

VERFAHREN ZUR STEUERUNG EINES KRAFTFAHRZEUGMOTORS ZUR EINSTELLUNG DER FETTHEIT DER LUFT-KRAFTSTOFF-MISCHUNG

METHOD FOR CONTROLLING A MOTOR VEHICLE ENGINE FOR ADJUSTING AN AIR/FUEL MIXTURE RICHNESS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.12.2005 FR 0512344**

(43) Date de publication de la demande:
**20.08.2008 Bulletin 2008/34**

(73) Titulaire: **Renault SAS**
**92100 Boulogne Billancourt (FR)**

(72) Inventeurs:
• **TRICAUD, Christophe**
**F-91850 Bouray (FR)**
• **BUIS, Emmanuel**
**F-92330 Sceaux (FR)**

(56) Documents cités:
**US-A- 5 819 714    US-A- 5 901 552**

• **MIANZO L ET AL: "Transient Air-Fuel Ratio H-infinity control of a Drive-By-Wire Internal Combustion Engine" PROCEEDINGS OF THE 2001 AMERICAN CONTROL CONFERENCE. ACC. ARLINGTON, VA, JUNE 25 - 27, 2001, AMERICAN CONTROL CONFERENCE, NEW YORK, NY : IEEE, US, vol. VOL. 4 OF 6, 25 juin 2001 (2001-06-25), pages 2867-2871, XP002284325 ISBN: 0-7803-6495-3**
• **CHRISTIAN WINGE VIGILD,KARSTEN P.H.ANDERSEN AND ELBERT HENDRICKS, MICHAEL STRUWE: "Towards Robust H-infinity Control of an SI- Engine's air/Fuel Ratio" SAE TECHNICAL PAPER SERIES, vol. 1999, no. 01-0854, 4 mars 1999 (1999-03-04), XP002397642 Detroit,Michigan**
• **KURAOKA H ET AL: "APPLICATION OF H-INFINITY DESIGN TO AUTOMOTIVE FUEL CONTROL" IEEE CONTROL SYSTEMS MAGAZINE, IEEE SEWRVICE CENTER, PISCATAWAY, NJ, US, vol. 10, no. 3, 1990, pages 102-106, XP001162824 ISSN: 0272-1708**

EP 1 957 779 B1

**EP 1 957 779 B1**

**Description**

L'invention concerne un procédé de commande d'un groupe motopropulseur de véhicule automobile.

Les moteurs diesel fonctionnent avec des mélanges carburés pauvres, c'est-à-dire avec un excès d'oxygène. La combustion des mélanges pauvres produit des oxydes d'azote ou NOx qu'il est nécessaire de traiter par conversion catalytique.

Pour réduire les émissions de NOx, une méthode consiste à stocker les NOx contenus dans les gaz d'échappement dans un piège à NOx encore appelé NOx-trap, et périodiquement, à traiter les NOx ainsi piégés en injectant massivement des substances réductrices telles que du carburant au cours d'une phase dite de régénération du piège à NOx.

Ce traitement des NOx nécessite l'obtention cyclique d'une richesse des gaz d'échappement supérieure à 1, c'est-à-dire qu'il est nécessaire de limiter la concentration d'espèces oxydantes par rapport à la concentration d'espèces réductrices dans les gaz d'échappement.

La richesse est une grandeur caractéristique du fonctionnement du moteur. Sa définition classique est traduite par le rapport des masses (ou des débits massiques) du carburant et de l'air, normalisé par le coefficient $K_s$ qui traduit ce même rapport déterminé dans le cas d'une combustion complète d'un mélange stoechiométrique de carburant et d'air. La formule est donc la suivante :

$$R = \frac{1}{\lambda} = K_s . \frac{Q_{carb}}{Q_{air}}$$

Avec :

$K_s$ : coefficient de normalisation égal à l'inverse du rapport du débit de carburant sur le débit d'air dans le cas de la stoechiométrie. Ce coefficient ne dépend que de la composition chimique du carburant et de l'air ;
$Q_{carb}$ : débit de carburant injecté dans le moteur ; et
$Q_{air}$ : débit d'air admis dans le moteur.

Actuellement, le circuit d'air d'un moteur diesel est piloté par trois actionneurs : le turbocompresseur, la vanne de recirculation des gaz d'échappement ou vanne EGR, et le volet à l'admission.

Le turbocompresseur est utilisé pour le contrôle de la pression collecteur. La waste-gate de la turbine à géométrie fixe ou les ailettes d'une turbine à géométrie variable sont pilotées de telle façon que la différence entre la pression de consigne du collecteur et la pression du collecteur mesurée par un capteur de pression soit nulle. La vanne EGR et le volet à l'admission sont utilisés pour contrôler d'autres grandeurs caractéristiques du circuit d'air.

Les moteurs à essence assurent un fonctionnement moteur autour de la richesse 1 pour une régulation de richesse à l'échappement via la quantité d'essence injectée.

Sur un moteur diesel, la richesse n'est pas souvent contrôlée alors qu'elle reste un facteur d'ordre 1 dans les émissions de polluants (en particulier des particules) et qu'elle joue également un rôle primordial dans le pilotage des systèmes de post-traitement tels que le piège à NOx ou le filtre à particules.

Dans le document EP-1 386 656, on propose de réaliser des purges des pièges à oxydes d'azote par simple augmentation de la richesse à l'échappement, sans réguler la richesse pour la maintenir à une valeur fixe. Il en est de même dans le document EP-0 937 876.

Dans les documents FR-2 755 184 et FR-2 749 350, on propose de réguler la richesse en utilisant un circuit PID avec un observateur ou bien avec un prédicteur de Smith mais pour un moteur à essence.

Dans la plupart de ces documents, les auteurs envisagent au mieux des régulateurs classiques de type proportionnel-intégral-dérivée (PID) alors que le système moteur+sonde est particulièrement difficile à contrôler pour deux raisons :

- la richesse est mesurée par une sonde UEGO placée à l'échappement qui introduit un retard dans la boucle de régulation ; et
- les caractéristiques du système moteur+sonde dépendent fortement du point de fonctionnement et des dispersions ou des dérives du moteur.

En outre, dans US 5 819 714, on propose un procédé de commande d'un moteur de véhicule dans lequel :

- on détermine une quantité de carburant à injecter, au moyen de paramètres résultant d'une synthèse de type $H_\infty$ ; et

2

- on commande une injection de la quantité ainsi déterminée.

Un but de l'invention est d'améliorer les stratégies de contrôle du moteur en termes de régulation de la richesse. Sont également visés :

- un compromis entre l'objectif recherché et les moyens nécessaires,
- une minimisation des risques d'instabilité numérique du régulateur.

Pour satisfaire à tout ou partie de ces considérations, la revendication 1 fournit une solution.

L'invention propose ainsi une stratégie de contrôle moteur de la régulation de richesse à l'échappement en mélange riche, via la quantité de carburant injectée par un correcteur $H_\infty$. L'avantage de la synthèse $H_\infty$ est de fournir une méthodologie simple pour la synthèse de correcteurs plus complexes mais plus efficaces que les correcteurs classiques envisagés dans les documents précités. L'invention est donc liée à la synthèse d'un correcteur permettant de prendre en compte, simultanément, des objectifs de performance (rapidité, précision, stabilité, rejets de perturbation d'entrée ou de sortie, amplification du bruit de mesure), de marge de stabilité et de robustesse vis-à-vis de l'incertitude de modélisation (dispersions).

Le procédé selon l'invention pourra présenter en outre au moins l'une quelconque des caractéristiques suivantes :

- on détermine des filtres de pondération d'au moins un signal d'entrée et/ou de sortie d'après des objectifs de performance prédéterminés, et on détermine les paramètres à partir des filtres ;
- on effectue la détermination en fonction d'au moins une des valeurs suivantes :

    - une valeur de consigne de richesse de mélange air-carburant ;
    - une valeur mesurée de richesse de mélange air-carburant ;
    - une différence entre la valeur de consigne et la valeur mesurée ;

- on détermine une quantité de carburant de prépositionnement ;
- on effectue la détermination lors d'une phase de régénération des oxydes d'azote d'un piège à oxydes d'azote ; et
- on effectue la détermination lors d'une phase de régénération des oxydes de souffre d'un piège à oxydes d'azote.

On prévoit également selon l'invention un moteur de véhicule, comprenant un organe pour déterminer une quantité de carburant à injecter, l'organe étant agencé pour mettre en oeuvre la détermination au moyen de paramètres résultant d'une synthèse de type $H_\infty$, selon la revendication 7.

On prévoit enfin selon l'invention un véhicule comprenant un moteur selon l'invention.

D'autres caractéristiques et avantages de l'invention apparaîtront encore dans la description suivante d'un mode préféré de réalisation donné à titre d'exemple non limitatif en référence aux dessins annexés sur lesquels :

- la figure 1 est un schéma bloc illustrant le problème standard de régulation à la base de l'invention ;
- la figure 2 est un schéma bloc du modèle du système mis en oeuvre dans l'invention ;
- la figure 3 est un schéma analogue à celui de la figure 2 complété au moyen de filtres ;
- la figure 4 illustre quatre courbes présentant les gabarits constituant ces filtres ;
- la figure 5 est un schéma du moteur dans le mode préféré de réalisation de l'invention mettant en oeuvre le procédé faisant l'objet des figures précédentes ;
- la figure 6 est un schéma bloc illustrant l'ensemble de la stratégie de contrôle moteur pour la richesse dans le moteur de la figure 5 ;
- les figures 7, 8 et 9 sont des schémas blocs illustrant l'implémentation des calculs intervenant dans le régulateur de la figure 6 ;
- la figure 10 est un schéma bloc présentant le détail de la fonction de régulation dans le schéma de la figure 6 ;
- la figure 11 est un schéma bloc présentant le détail de la fonction de prépositionnement dans le schéma de la figure 6 ; et
- la figure 12 illustre des courbes obtenues lors de la mise en oeuvre expérimentale du procédé de l'invention.

On va décrire en référence aux figures un mode préféré de mise en oeuvre du procédé de l'invention dont on présentera tout d'abord les fondements théoriques.

Dans ce mode de réalisation, le procédé est mis en oeuvre pour une purge de SOx. Contrairement à une purge de SOx, qui peut durer plusieurs minutes, une purge de NOx ne dure que quelques secondes. On a ainsi besoin d'atteindre la consigne de richesse plus rapidement que dans une purge de SOx. Les régulateurs de type PID ne sont donc pas satisfaisants. Mais la régulation obtenue par le procédé de l'invention s'applique aussi bien à une purge de NOx qu'à une purge de SOx.

La description de la méthodologie $H_\infty$ est tirée du livre « Commande H∞ et μ-analyse » de Gilles Duc et Stéphane Font, paru aux éditions Hermès dans la collection Hermès Science.

a) Principe mathématique

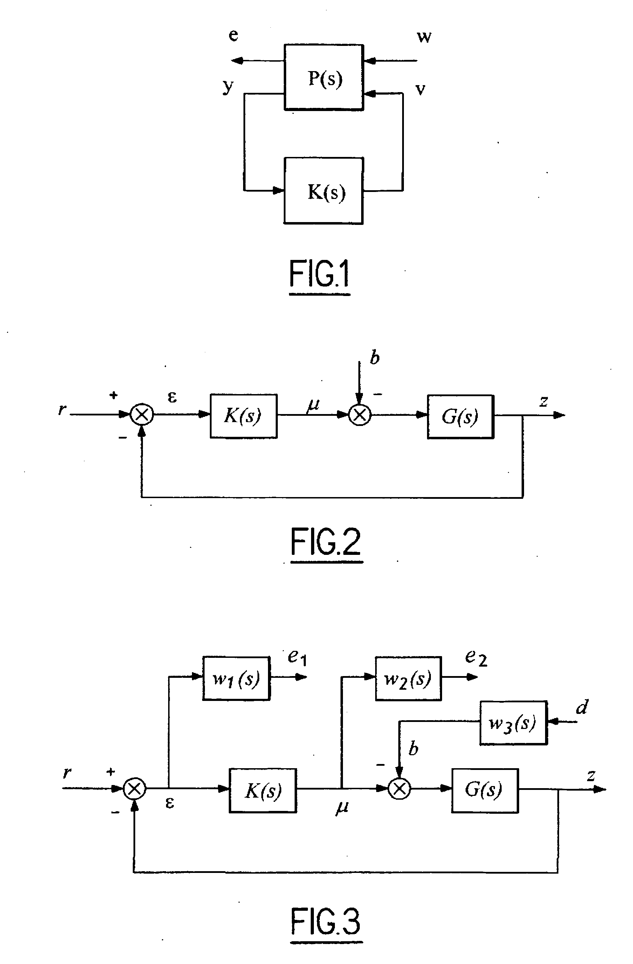

La synthèse $H_\infty$ utilise la notion de problème standard, qui est une méthode de représentation d'un problème d'automatique. Ce problème a été illustré à la figure 1. Il met en oeuvre :

- une matrice P(s) qui modélise les interactions dynamiques entre deux ensembles d'entrées et deux ensembles de sorties : le vecteur *w* représente des entrées extérieures du système telles que des signaux de référence, des perturbations ou des bruits ; le vecteur *v* représente les commandes (sortie du correcteur) ; les signaux e sont choisis pour caractériser le bon fonctionnement de l'asservissement (signaux intermédiaires qui devront respecter certains critères) ; enfin *y* représente les mesures disponibles pour élaborer la commande (entrée du correcteur) ; et

- un correcteur K(s) à déterminer.

On déduit par transformation fractionnaire linéaire la matrice de transfert entre w et e du système bouclé :

$$H_{ew}(s)=f(P(s),K(s))$$

qui est fonction à la fois de P(s) et de K(s).

La synthèse $H_\infty$ du correcteur est alors définie par le problème suivant standard : P(s) et $\gamma>0$ étant donnés, déterminer K(s) qui stabilise le système bouclé de la figure précédente et assure

$$\left\| Hew(s) = f(P(s), K(s)) \right\|_\infty \langle \gamma .$$

Cette seconde condition est une caractéristique essentielle de la synthèse $H_\infty$. En plus de trouver un correcteur qui stabilise le système, la synthèse $H_\infty$ impose des contraintes sur des signaux intermédiaires du système, qui permettront de fixer en plus divers objectifs de performance, de marge de stabilité et de robustesse.

Les correcteurs assurant la plus petite valeur de $\gamma$ possibles seront dits 'optimaux'. Ce problème mathématique sera résolu par l'approche par équation de Ricatti appelée également algorithme de Glover-Doyle. La valeur de $\gamma$ est recherchée par dichotomie, puis le correcteur calculé à partir d'équations algébriques.

b) Mise en oeuvre

La mise en oeuvre prend en l'espèce comme point de départ le schéma bloc de la figure 2. Sur celui-ci, G(s) est un modèle du système moteur+sonde et K(s) le correcteur à déterminer pour asservir la sortie *z* sur la référence *r*. Le signal *b* est une perturbation et $\varepsilon$ est l'écart entre la consigne et la mesure.

La matrice de transfert entre les signaux d'entrée *r* et *b* d'une part, l'erreur d'asservissement $\varepsilon$ et la commande *u* d'autre part est la suivante :

$$\begin{pmatrix} E(s) \\ U(s) \end{pmatrix} = M(s) \begin{pmatrix} R(s) \\ B(s) \end{pmatrix} = \begin{pmatrix} S(s) & S(s)G(s) \\ K(s) & K(s)S(s)G(s) \end{pmatrix} \begin{pmatrix} R(s) \\ B(s) \end{pmatrix}$$

où $S=(1+GK)^{-1}$ est la fonction de sensibilité de l'asservissement.

En considérant le cadre standard introduit précédemment, un problème intéressant consiste à chercher un nombre y>0 et un correcteur K(s) stabilisant le système bouclé et assurant :

$$\left\| \begin{pmatrix} S & SG \\ KS & KSG \end{pmatrix} \right\|_\infty < \gamma \qquad \text{(Condition sur les signaux intermédiaires } e \text{ et } u\text{)}$$

Dans ce problème, on tient compte en effet de deux signaux d'entrée ($r$ et $b$ à rapprocher de $w$ de la figure 1), appliqués à deux endroits différents de l'asservissement et on surveille l'évolution de deux signaux de sortie ($\varepsilon$ et $u$ à rapprocher de e de la figure 1). On veut en effet que l'erreur reste faible mais au prix de commandes raisonnables, condition que la majoration de la norme infinie doit permettre d'assurer.

Le problème ci-dessus se présente donc comme la recherche d'un compromis entre l'objectif recherché et les moyens nécessaires.

Toutefois cette formulation s'avère trop rigide car elle ne laisse aucun choix à l'utilisateur pour régler ce compromis.

On introduit alors des pondérations sur les différents signaux, qui prendront la forme de filtres, permettant suivant le signal de privilégier un domaine de fréquence particulier. Considérons à cette fin le schéma de la figure 3, dans lequel l'erreur $\varepsilon$ est pondérée par le filtre $w_1(s)$, la commande $u$ par le filtre $w_2(s)$ et l'entrée de perturbation $b$ est la sortie d'un filtre $w_3(s)$.

On obtient à présent, en considérant $r$ et $d$ comme entrées et $e_1$ et $e_2$ comme signaux à surveiller :

$$\begin{pmatrix} E_1(s) \\ E_2(s) \end{pmatrix} = \begin{pmatrix} w_1(s)S(s) & w_1(s)S(s)G(s)w_3(s) \\ w_2(s)K(s)S(s) & w_2(s)K(s)S(s)G(s)w_3(s) \end{pmatrix} \begin{pmatrix} R(s) \\ D(s) \end{pmatrix}$$

Le problème $H_\infty$ standard qui en découle est donc le suivant : Déterminer le nombre $\gamma > 0$ et le correcteur K(s) stabilisant le système bouclé et assurant :

$$\left\| \begin{pmatrix} w_1 S & w_1 SGw_3 \\ w_2 KS & w_2 KSGw_3 \end{pmatrix} \right\|_\infty < \gamma$$

En plus de désévériser le problème standard, les gabarits $w_1$, $w_2$ et $w_3$ permettent le modelage des différents transferts S, KS, SG et KSG.

En effet, les propriétés de la norme $H_\infty$ assurent que si la condition précédente est vérifiée alors les quatre conditions suivantes le sont également :

$$\|w_1 S\|_\infty < \gamma \Leftrightarrow \forall \omega \in R \, |S(j\omega)| < \frac{\gamma}{|w_1(j\omega)|}$$

$$\|w_2 KS\|_\infty < \gamma \Leftrightarrow \forall \omega \in R \, |K(j\omega)S(j\omega)| < \frac{\gamma}{|w_2(j\omega)|}$$

$$\|w_1 w_3 SG\|_\infty < \gamma \Leftrightarrow \forall \omega \in R \, |S(j\omega)G(j\omega)| < \frac{\gamma}{|w_1(j\omega)w_3(j\omega)|}$$

$$\|w_2 w_3 KSG\|_\infty < \gamma \Leftrightarrow \forall \omega \in R \, |K(j\omega)S(j\omega)G(j\omega)| < \frac{\gamma}{|w_2(j\omega)w_3(j\omega)|}$$

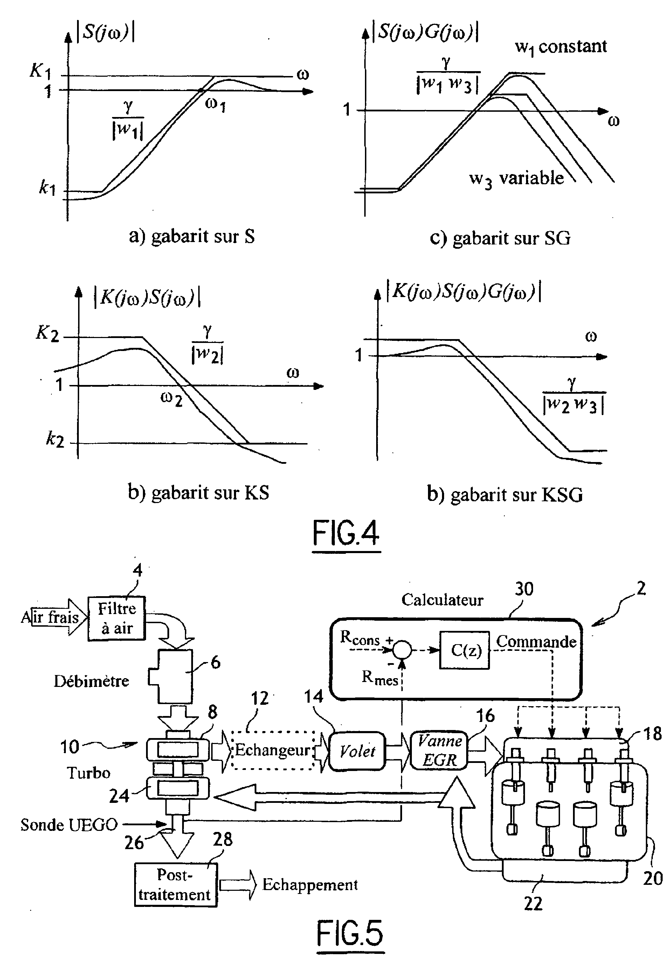

La figure 4 montre un choix de gabarits possible. Elle illustre respectivement en effet le choix du gabarit sur S, sur SG, sur KS et KSG.

Le principal intérêt de cette méthode est le lien direct qui existe entre l'allure des gabarits et les objectifs de performance, de stabilité et de robustesse choisis pour la boucle de régulation.

En pratique, on choisit préalablement les filtres $w_1(s)$, $w_2(s)$ et $w_3(s)$ d'après des objectifs de performances souhaités, choix que l'homme du métier peut opérer compte tenu de ces indications, sans explication supplémentaire. On résout ensuite le problème $H_\infty$ correspondant, ce qui donne la valeur de $\gamma$ et le correcteur K(p), qui stabilise donc le système et assure les objectifs souhaités à la boucle de régulation.

Bien entendu, la valeur de $\gamma$ n'est pas connue à l'avance, mais elle intervient dans les gabarits (de manière multiplicative). Afin d'obtenir un système bouclé respectant les gabarits choisis pour les objectifs d'asservissement, et non des gabarits multipliés par une certaine valeur de $\gamma$, on oriente le choix des filtres de façon à avoir une valeur de $\gamma$ proche de 1.

On remarquera que, dans une synthèse $H_\infty$, l'ordre du correcteur est le suivant :

$$ordreK(s) = ordreG(s) + \sum ordreWi(s)$$

Par transposition continu-discret, on obtient enfin le correcteur numérique équivalent C(z) :

$$C(z) = \frac{b_0 + b_1 z^{-1} + ... + b_n z^{-n}}{a_0 + a_1 z^{-1} + ... + a_n z^{-n}}$$

où $a_i$ et $b_i$ sont des coefficients.

c) Intégration du correcteur $H_\infty$ dans une stratégie de contrôle du moteur

Le correcteur $H_\infty$ déterminé précédemment est ensuite intégré dans une stratégie de contrôle moteur codée dans le calculateur du moteur. La stratégie a pour objectif d'établir la quantité totale de carburant à injecter pour suivre la consigne de richesse.

Le moteur selon l'invention a à titre d'exemple été illustré à la figure 5. Il comprend d'amont en aval dans le circuit d'air entrant un filtre à air 4, un débitmètre 6 et un compresseur 8 d'un turbocompresseur 10. L'air transite ensuite par un échangeur de chaleur 12, puis un volet 14 et une vanne d'EGR 16 avant d'arriver dans le collecteur d'admission 18. Il est ensuite envoyé dans les chambres de combustion de la culasse 20 du moteur. (Ainsi, le moteur considéré est équipé d'un système de recirculation des gaz à l'échappement (EGR) et d'un système de vannage à l'admission). Le collecteur d'échappement 22 envoie une partie des gaz d'échappement en direction de la vanne d'EGR, et la partie résiduelle en direction de la turbine 24 du turbocompresseur. Une sonde UEGO 26 est prévue en aval de la turbine pour mesurer la richesse des gaz d'échappement. Les gaz traversent ensuite un organe de post-traitement 28 pour être enfin évacués. Le véhicule comprend un calculateur 30 qui commande la quantité de carburant à injecter, c'est-à-dire la richesse du mélange, à partir d'une mesure de la richesse des gaz d'échappement fournie par la sonde UEGO et une valeur de consigne fournie par cartographie.

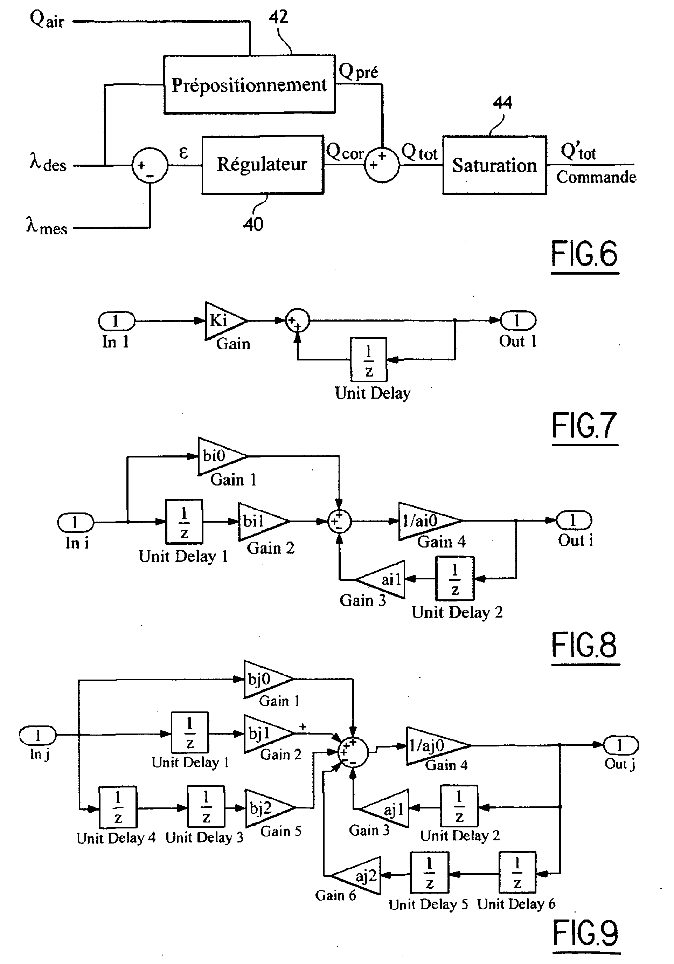

La stratégie complète de régulation de richesse a été illustrée sur le schéma bloc de la figure 6.

Une cartographie de consigne dépendante du mode de régénération désiré donne une richesse d'échappement de consigne $\lambda_{des}$. La sonde placée à l'échappement mesure par ailleurs la richesse de fonctionnement du moteur $\lambda_{mes}$.

Le rôle du correcteur ou régulateur 40 est de calculer une commande $Q_{cor}$ de quantité totale de carburant à injecter qui annule la différence entre la richesse de consigne et la richesse mesurée. La stratégie de contrôle moteur met en oeuvre, en plus de la régulation par le régulateur 40, la détermination d'une valeur de prépositionnement $Q_{pré}$ au bloc 42 et enfin un étage de saturation au bloc 44.

On va tout d'abord présenter le détail du régulateur 40.

On considère la représentation discrète C(z) du régulateur $H_\infty$. Le correcteur est décomposé en la somme d'un terme intégral et d'un terme D(z) polynomial, que l'on pourra par exemple appeler dérivée généralisée.

$$C(z) = I(z) + D(z)$$

Où:

$$I(z) = \frac{Ki}{1 - z^{-1}}$$

$$D(z) = \frac{b'0 + b'1.\,z^{-1} + \ldots + b'n.\,z^{-n}}{a'0 + a'1.\,z^{-1} + \ldots + a'n.\,z^{-n}}$$

Pour minimiser les risques d'instabilité numérique du régulateur, on décompose la partie dérivée en termes simples du premier ou du deuxième ordre. On a alors :

$$D(z) = \sum_i \frac{b_{i0} + b_{i1}z^{-1}}{a_{i0} + a_{i1}z^{-1}} + \sum_j \frac{b_{j0} + b_{j1}z^{-1} + b_{j2}z^{-2}}{a_{j0} + a_{j1}z^{-1} + a_{j2}z^{-2}}$$

Si on appelle $\varepsilon(k)$ l'entrée du régulateur C(z) et u(k) la sortie, on a :

$$u(k) = Ki.\varepsilon(k) + u_I(k-1) \tag{1}$$
$$+ \left(b_{i0}.\varepsilon(k) + b_{i1}.\varepsilon(k-1) - a_{i1}.u_i(k-1)\right)/a_{i0} \tag{2}$$
$$+ \ldots$$
$$+ \left(b_{j0}.\varepsilon(k) + b_{j1}.\varepsilon(k-1) + b_{j2}.\varepsilon(k-2) - a_{j1}.u_j(k-1) - a_{j2}.u_j(k-2)\right)/a_{j0} \tag{3}$$
$$+ \ldots$$

Le premier des termes de cette somme au niveau du signe « (1) » correspond au terme intégral. Le terme figurant sur la ligne suivante « (2) » correspond à l'une des fonctions de transfert de premier ordre FT1i et le terme développé sur l'une des lignes suivantes (3) correspond à une fonction de transfert du deuxième ordre FT2j.

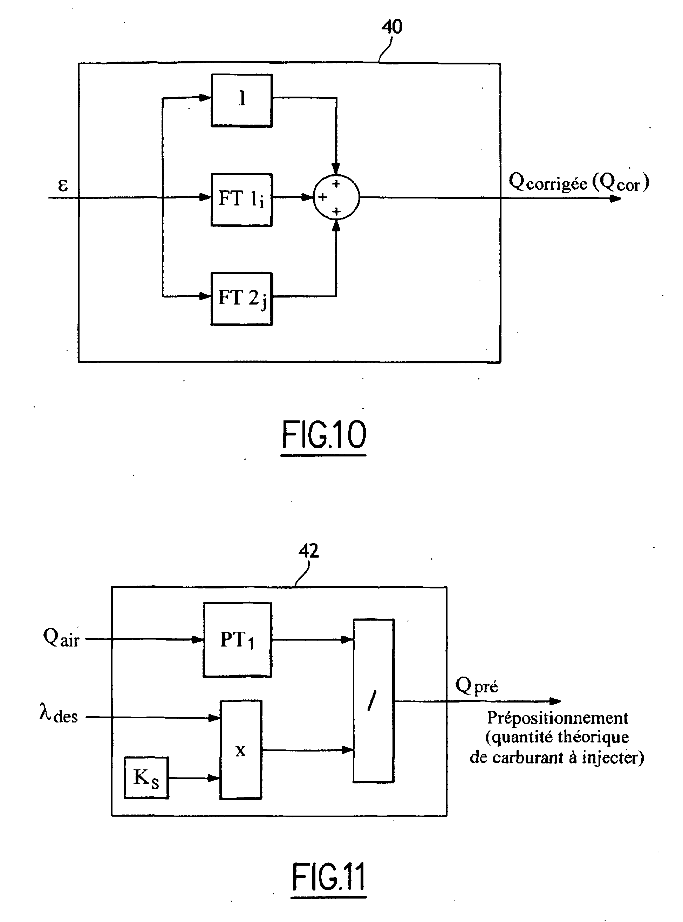

Matériellement, le régulateur est implémenté de la façon suivante au sein du calculateur. Pour la partie intégrale, on met en oeuvre un circuit de calcul conforme au schéma bloc de la figure 7. Pour les fonctions de transfert du premier ordre, on met en oeuvre un schéma bloc tel que celui illustré à la figure 8 et enfin pour les fonctions de transfert du deuxième ordre, on met en oeuvre un schéma bloc du type de celui de la figure 9. Enfin, on fait la somme de tous ces signaux pour obtenir le signal de contrôle du régulateur. Cette somme a été illustrée à la figure 10 qui montre le détail du bloc 40.

Le détail du bloc 42 de prépositionnement a été illustré à la figure 11. Le prépositionnement est calculé à partir de la formule de la richesse.

$$R = \frac{1}{\lambda} = K_s \frac{Q_{carb}}{Q_{air}} \Leftrightarrow Q_{carb} = \frac{Q_{air}}{\lambda K_s}$$

Il permet d'obtenir une valeur $Q_{pré}$ qui est la quantité théorique de carburant à injecter.

Le débit d'air est filtré par un bloc $PT_1$ car, lors d'un début de purge, le débit d'air est fortement perturbé par la fermeture du volet d'admission. De cette façon, on limite l'influence de cette perturbation sur le prépositionnement.

Enfin, la commande de la quantité totale $Q_{tot}$ de carburant à injecter résultant de la somme des valeurs $Q_{pré}$ et $Q_{cor}$ obtenues aux blocs 40 et 42 est ensuite saturée au niveau du bloc 44 pour limiter la commande en cas de défaut sur la régulation (problème de sonde par exemple). On obtient donc la valeur finale $Q'_{tot}$ de carburant à injecter. C'est cette quantité qui sera effectivement injectée.

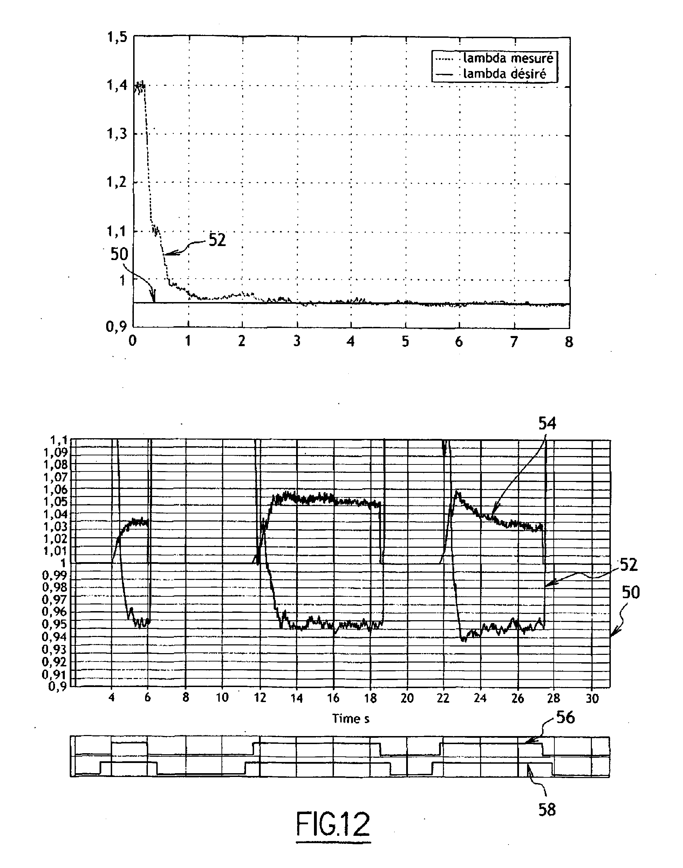

Des courbes résultant de la mise en oeuvre expérimentale du procédé de l'invention tel qu'il vient d'être présenté sont illustrées sur les diagrammes de la figure 12.

On a ainsi présenté les courbes correspondant à la richesse désirée 50, la richesse mesurée 52, le signal de contrôle 54, le signal indiquant l'activation de la régulation 56 et le signal indiquant l'activation du prépositionnement 58. Ont été indiquées en ordonnée la richesse et en abscisse le temps en secondes.

Il est précisé qu'on active le prépositionnement avant la régulation. On active en plus la régulation quand la valeur $\varepsilon$ est inférieure au seuil calibrable. Enfin on désactive le prépositionnement et la régulation en fonction de l'atteinte de certains critères, par exemple l'expiration d'un temps donné.

On peut par exemple mettre en oeuvre l'invention pour réguler la richesse lors de la régénération d'un piège à oxydes d'azote que l'on réalise en passant à une richesse supérieure à 1, c'est-à-dire à un mélange riche. Il est tout à fait envisageable d'utiliser une structure similaire pour réguler la richesse en mélange pauvre.

L'invention est applicable aux moteurs diesel ou à essence.

Bien entendu on pourra apporter à l'invention de nombreuses modifications sans sortir du cadre de celle-ci.

**Revendications**

1. Procédé de commande d'un moteur de véhicule, dans lequel:

    - on détermine une quantité ($Q'_{tot}$) de carburant à injecter, au moyen de paramètres ($a_i$, $b_i$ ; $k_i$, $a_{nm}$, $b_{nm}$) résultant d'une synthèse de type $H_\infty$ ; et
    - on commande une injection de la quantité ainsi déterminée, **caractérisé en ce que** :
    - on effectue la détermination au moyen d'un régulateur représenté sous forme discrète par une fonction du type :

$$C(z) = \frac{b_0 + b_1 z^{-1} + ... + b_n z^{-n}}{a_0 + a_1 z^{-1} + ... + a_n z^{-n}}$$

    où $a_i$ et $b_i$ sont des coefficients, ou,
    - on effectue la détermination au moyen d'un régulateur représenté sous forme discrète par une fonction du type :

$$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

    où $K_i$, $a_{nm}$ et $b_{nm}$ sont des coefficients.

2. Procédé selon la revendication 1, **caractérisé en ce qu'**on détermine une quantité de carburant de prépositionnement ($Q_{pré}$).

3. Procédé selon l'une quelconque des revendications précédentes, **caractérisé en ce qu'**on effectue la détermination lors d'une phase de régénération des oxydes d'azote d'un piège à oxydes d'azote.

4. Procédé selon l'une quelconque des revendications précédentes, **caractérisé en ce qu'**on effectue la détermination lors d'une phase de régénération des oxydes de souffre d'un piège à oxydes d'azote.

5. Procédé selon l'une quelconque des revendications précédentes, **caractérisé en ce qu'**on détermine des filtres ($w_i$) de pondération d'au moins un signal d'entrée et/ou de sortie d'après des objectifs de performance prédéterminés, et on détermine les paramètres à partir des filtres.

6. Procédé selon l'une quelconque des revendications précédentes, **caractérisé en ce qu'**on effectue la détermination en fonction d'au moins une des valeurs suivantes :

    - une valeur de consigne ($\lambda_{des}$) de richesse de mélange air-carburant ;
    - une valeur mesurée ($\lambda_{mes}$) de richesse de mélange air-carburant ;
    - une différence ($\varepsilon$) entre la valeur de consigne et la valeur mesurée.

7.  Moteur (2) de véhicule, comprenant un organe (30) pour déterminer une quantité ($Q'_{tot}$) de carburant à injecter, l'organe étant agencé pour mettre en oeuvre la détermination au moyen de paramètres résultant d'une synthèse de type $H_\infty$, **caractérisé en ce qu'**il comprend un régulateur (40) pour effectuer ladite détermination et qui est représenté sous forme discrète :

    - par une fonction de type

    $$C(z) = \frac{b_0 + b_1 z^{-1} + ... + b_n z^{-n}}{a_0 + a_1 z^{-1} + ... + a_n z^{-n}}$$

    où $a_i$ et $b_i$ sont des coefficients
    - ou par une fonction de type

    $$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

    où $K_i$, $a_{nm}$ et $b_{nm}$ sont des coefficients.

8.  Véhicule, **caractérisé en ce qu'**il comprend un moteur selon la revendication précédente.

**Claims**

1.  Method for controlling a motor vehicle engine, in which:

    - a quantity ($Q'_{tot}$) of fuel to be injected is determined by means of parameters ($a_i$, $b_i$; $k_i$, $a_{nm}$, $b_{nm}$) resulting from an $H_\infty$ synthesis; and
    - an injection of the quantity thus determined is commanded, **characterized in that**:
    - the determination is made by means of a regulator represented in discrete form by a function of the type:

    $$C(z) = \frac{b_0 + b_1 z^{-1} + ... + b_n z^{-n}}{a_0 + a_1 z^{-1} + ... + a_n z^{-n}}$$

    where $a_i$ and $b_i$ are coefficients, or,
    - the determination is made by means of a regulator represented in discrete form by a function of the type:

    $$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

    where $K_i$, $a_{nm}$ and $b_{nm}$ are coefficients.

2.  Method according to Claim 1, **characterized in that** a quantity of prepositioning fuel ($Q_{pre}$) is determined.

3.  Method according to either one of the preceding claims, **characterized in that** the determination is made during a nitrogen oxide regeneration phase of a nitrogen oxide trap.

4.  Method according to any one of the preceding claims, **characterized in that** the determination is made during a sulphur oxide regeneration phase of a nitrogen oxide trap.

5. Method according to any one of the preceding claims, **characterized in that** filters ($w_i$) are determined for weighting at least one input and/or output signal according to predetermined performance objectives, and the parameters are determined based on the filters.

6. Method according to any one of the preceding claims, **characterized in that** the determination is made as a function of at least one of the following values:

 - a set point value ($\lambda_{des}$) of richness of air-fuel mixture;
 - a measured value ($\lambda_{mes}$) of richness of air-fuel mixture;
 - a difference ($\varepsilon$) between the set point value and the measured value.

7. Vehicle engine (2), comprising a member (30) for determining a quantity ($Q'_{tot}$) of fuel to be injected, the member being arranged in order to use the determination by means of parameters resulting from an $H_\infty$ synthesis, **characterized in that** it comprises a regulator (40) for making the said determination and which is represented in discrete form:

 - by a function of the type

$$C(z) = \frac{b_0 + b_1 z^{-1} + ... + b_n z^{-n}}{a_0 + a_1 z^{-1} + ... + a_n z^{-n}}$$

 where $a_i$ and $b_i$ are coefficients
 - or by a function of the type

$$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

 where $K_i$, $a_{nm}$ and $b_{nm}$ are coefficients.

8. Vehicle, **characterized in that** it comprises an engine according to the preceding claim.

**Patentansprüche**

1. Verfahren zur Steuerung eines Fahrzeugmotors, bei dem:

 - eine Menge ($Q'_{tot}$) von einzuspritzendem Kraftstoff mit Hilfe von Parametern ($a_i$, $b_i$; $k_i$, $a_{nm}$, $b_{nm}$) bestimmt wird, die aus einer Synthese des Typs $H_\infty$ resultieren; und
 - eine Einspritzung der so bestimmten Menge gesteuert wird,
 **dadurch gekennzeichnet, dass**:
 - die Bestimmung mittels eines Reglers durchgeführt wird, der in diskreter Form durch eine Funktion des folgenden Typs dargestellt wird:

$$C(z) = \frac{b_0 + b_1 z^{-1} + ... + b_n z^{-n}}{a_0 + a_1 z^{-1} + ... + a_n z^{-n}}$$

wobei $a_i$ und $b_i$ Koeffizienten sind, wobei
- die Bestimmung mittels eines Reglers durchgeführt wird, der in diskreter Form durch eine Funktion des folgenden Typs dargestellt wird:

$$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

wobei $K_i$, $a_{nm}$ und $b_{nm}$ Koeffizienten sind.

2. Verfahren nach Anspruch 1, **dadurch gekennzeichnet, dass** eine Kraftstoff-Voreinstellungsmenge ($Q_{pré}$) bestimmt wird.

3. Verfahren nach einem der vorhergehenden Ansprüche, **dadurch gekennzeichnet, dass** die Bestimmung in einer Phase der Regeneration der Stickoxide einer Stickoxidfalle durchgeführt wird.

4. Verfahren nach einem der vorhergehenden Ansprüche, **dadurch gekennzeichnet, dass** die Bestimmung in einer Phase der Regeneration der Schwefeloxide einer Stickoxidfalle durchgeführt wird.

5. Verfahren nach einem der vorhergehenden Ansprüche, **dadurch gekennzeichnet, dass** Gewichtungsfilter ($w_i$) mindestens eines Eingangs- und/oder Ausgangssignals je nach vorbestimmten Leistungszielen bestimmt werden, und die Parameter ausgehend von den Filtern bestimmt werden.

6. Verfahren nach einem der vorhergehenden Ansprüche, **dadurch gekennzeichnet, dass** die Bestimmung abhängig von mindestens einem der folgenden Werte durchgeführt wird:

   - ein Sollwert ($\lambda_{des}$) des Anreicherungsgrads des Luft-Kraftstoffgemischs;
   - ein gemessener Wert ($\lambda_{mes}$) des Anreicherungsgrads des Luft-Kraftstoffgemischs;
   - eine Differenz ($\varepsilon$) zwischen dem Sollwert und dem gemessenen Wert.

7. Fahrzeugmotor (2), der ein Organ (30) zur Bestimmung einer Menge ($Q'_{tot}$) von einzuspeisendem Kraftstoff enthält, wobei das Organ eingerichtet ist, um die Bestimmung mittels Parametern durchzuführen, die aus einer Synthese des Typs $H_\infty$ resultieren, **dadurch gekennzeichnet, dass** er einen Regler (40) enthält, um die Bestimmung auszuführen, und der in diskreter Form dargestellt wird durch:

   - eine Funktion des Typs

$$C(z) = \frac{b_0 + b_1 z^{-1} + ... + b_n z^{-n}}{a_0 + a_1 z^{-1} + ... + a_n z^{-n}}$$

wobei $a_i$ und $b_i$ Koeffizienten sind
- oder durch eine Funktion des Typs

$$C(z) = \frac{K_i}{1 - z^{-1}} + \sum_i \frac{b_{i0} + b_{i1} z^{-1}}{a_{i0} + a_{i1} z^{-1}} + \sum_j \frac{b_{j0} + b_{j1} z^{-1} + b_{j2} z^{-2}}{a_{j0} + a_{j1} z^{-1} + a_{j2} z^{-2}}$$

wobei $K_i$, $a_{nm}$ und $b_{nm}$ Koeffizienten sind.

8. Fahrzeug, **dadurch gekennzeichnet, dass** es einen Motor gemäß dem vorhergehenden Anspruch enthält.

FIG.1

FIG.2

FIG.3

12

EP 1 957 779 B1

**a) gabarit sur S**

**c) gabarit sur SG**

**b) gabarit sur KS**

**b) gabarit sur KSG**

## FIG.4

## FIG.5

FIG.6

FIG.7

FIG.8

FIG.9

40

$\varepsilon$

1

FT 1$_i$

FT 2$_j$

+ +

Q corrigée (Q$_{cor}$)

## FIG.10

42

Q$_{air}$

$\lambda_{des}$

K$_s$

PT$_1$

x

/

Q$_{pré}$

Prépositionnement
(quantité théorique
de carburant à injecter)

## FIG.11

FIG.12

16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1386656 A
- EP 0937876 A
- FR 2755184
- FR 2749350
- US 5819714 A

**Littérature non-brevet citée dans la description**

- **Gilles Duc ; Stéphane Font.** Commande H∞ et μ-analyse. Hermès Science